# FASCICULE DE BREVET EUROPEEN

(11) **EP 1 725 424 B1**
(45) Date de publication et mention de la délivrance du brevet: **21.02.2018**
(21) Numéro de dépôt: 05730852.0
(22) Date de dépôt: 23.02.2005
(51) Int. Cl.: B60M 3/06, B60L 11/18, B60M 1/30

(54) **SYSTEME D'ALIMENTATION EN ENERGIE ELECTRIQUE A TRES BASSE TENSION POUR VEHICULE A TRACTION ELECTRIQUE A STOCKAGE D'ENERGIE EMBARQUE**
SYSTEM ZUR ZUFUHR VON ELEKTRISCHER ENERGIE MIT SEHR NIEDRIGER SPANNUNG ZU EINEM ELEKTRISCHEN TRIEBFAHRZEUG MIT EINEM BORD-ENERGIESPEICHER
SYSTEM FOR SUPPLYING VERY LOW VOLTAGE ELECTRICAL ENERGY FOR AN ELECTRICAL TRACTION VEHICLE COMPRISING AN ONBOARD STORE OF ENERGY

(30) Priorité: 23.02.2004 FR 0401802
(43) Date de publication de la demande: 29.11.2006
(73) Titulaire: Afriat, Hervé, 75014 Paris (FR)
(72) Inventeur: Afriat, Hervé, 75014 Paris (FR)
(86) Numéro de dépôt international: PCT/FR2005/000422
(87) Numéro de publication internationale: WO 2005/082666

(56) Documents cités:
- FR-A- 2 825 666
- US-A- 3 637 956
- US-B1- 6 250 442

## Description

### DOMAINE DE L'INVENTION

La présente invention concerne un système d'alimentation en énergie électrique à très basse tension pour véhicule à traction électrique à stockage d'énergie embarqué.

### ETAT DE LA TECHNIQUE ANTERIEURE

On entend par très basse tension, des tensions de l'ordre de quelques dizaines de volts par opposition aux systèmes d'alimentations traditionnels des tramways et des trolleybus dans lesquels l'alimentation se fait avec des tensions de plusieurs centaines de volts.

Ces dernières années, le tramway, alimenté par des lignes aériennes de contact, revient en ville en raison de ses nombreux avantages, notamment celui de permettre un trafic important et régulier de voyageurs, d'être en surface et de ne pas émettre de gaz d'échappement.

Il en est de même des véhicules à pneus à traction électrique, comme le trolleybus.

Cependant, la présence des lignes aériennes de contact, qui alimentent électriquement ces véhicules présentent des inconvénients parmi lesquels :
- des dangers liés à la présence d'une tension de près de 1000 V à quelques mètres au-dessus du sol en zone à forte densité humaine,
- des contraintes d'accès pour les véhicules pompiers,
- des contraintes liées au franchissement des carrefours, la hauteur des lignes aériennes devant y être au minimum à 6 mètres au-dessus du sol,
- l'aspect inesthétique produit par des lignes aériennes en pleine ville, etc.

Pour s'affranchir des lignes aériennes, il existe différentes solutions.

L'une de ces solutions consiste à utiliser la tension traditionnelle d'alimentation des tramways, de 750 V à de près de 1000 V continu, l'alimentation du véhicule se faisant par une portion de ligne électrique qui, elle-même, n'est alimentée par le sol que lorsque le véhicule se trouve au-dessus de ladite portion.

Une autre solution consiste à équiper le véhicule d'un dispositif de stockage d'énergie lui conférant une certaine autonomie entre les stations, la recharge s'effectuant quand le véhicule s'arrête à des stations spécialement conçues à cet effet.

Une autre solution, décrite dans le brevet FR 2 825 666, consiste à utiliser un véhicule conçu pour être alimenté directement par les rails à faible niveau de tension n'excédant pas 60V en tension continue ou 25V en tension alternatif.

Toutefois, ces trois solutions ne sont pas entièrement satisfaisantes.

Dans la première solution, outre un surcoût non négligeable lié à l'installation d'une ligne électrique souterraine, le risque majeur lié à la tension reste présent et doit être éliminé par la révision régulière et rigoureuse des systèmes de sécurité qui doivent rester fiables malgré l'usure, les variations climatiques, etc.

Dans la seconde solution, des difficultés apparaissent en raison des performances encore moyennes des dispositifs de stockage, qu'ils soient à base de batteries d'accumulateurs ou d'hyper-condensateurs.

Quant à la troisième solution, qui en fait reprend le principe du train électrique miniature alimenté directement par les rails en très basse tension, d'une part, la puissance instantanée disponible restant modeste, une limitation apparaît du fait que le véhicule ferroviaire ne peut excéder quelques tonnes.

D'autre part, une nouvelle conception mécanique du véhicule ferroviaire devient nécessaire afin de ne pas mettre les voies en court-circuit, entraînant de ce fait une incompatibilité avec les circuits de voies traditionnels.

Par ailleurs, pour fonctionner, le tramway traditionnel à caténaire nécessite plusieurs sous-stations, nommées postes de redressement, chargées de fournir une alimentation de plusieurs centaines, voire milliers d'ampères sous une tension de 750 V continus. Lesdits postes de redressement sont disposés le long de la ligne toutes les trois, quatre ou cinq stations d'arrêt. La puissance installée est habituellement de l'ordre du mégawatt par poste de redressement. De plus, lesdits postes de redressement occupent une surface et un volume qui sont loin d'être négligeables, et constituent quelquefois un véritable casse-tête pour les ingénieurs pour leur trouver un emplacement disponible. En outre, compte tenu du prix généralement élevé du m² en ville, ces postes de redressement peuvent être particulièrement coûteux.

### BUT DE L'INVENTION

Le but de la présente invention est de remédier à ces inconvénients et propose à cet effet un système d'alimentation en énergie électrique à très basse tension pour véhicule à traction électrique à stockage d'énergie embarqué, qui soit satisfaisant sur le plan de la capacité de transport des voyageurs, de la sécurité vis-à-vis des risques électriques et de l'efficacité énergétique.

Un autre but de la présente invention est de réduire sensiblement les contraintes liées aux postes de redressement traditionnels.

Un autre but est de simplifier sensiblement l'infrastructure d'une ligne de transport de type tramway ou trolleybus.

### RESUME DE L'INVENTION

L'invention concerne les objets tels que définis dans les revendications. Ainsi, l'invention concerne un système d'alimentation en énergie électrique à très basse tension pour au moins un véhicule à traction électrique circulant sur une voie, ledit véhicule étant équipé de roues et roulant sur ladite voie, et d'au moins une chaîne de traction agissant sur les roues et comprenant, de façon connue en soi, au moins un moteur électrique et sa commande,
ledit système d'alimentation étant caractérisé en ce qu'il comprend :
- au moins un moyen d'alimentation électrique à très basse tension installé à proximité immédiate de la voie,
- deux éléments d'alimentation électrique linaires parallèles entre eux, contigus ou distants, dont un premier est relié à une borne dudit moyen d'alimentation électrique et le deuxième est relié à une autre borne dudit moyen d'alimentation électrique,
- au moins un premier moyen collecteur d'énergie électrique embarqué dans le véhicule et placé en contact mobile avec ledit premier élément d'alimentation linéaire,
- au moins un second moyen collecteur d'énergie électrique également embarqué dans le véhicule et placé en contact mobile avec ledit second élément d'alimentation linéaire,
- au moins un moyen de stockage d'énergie électrique embarqué dans le véhicule, et
- au moins un moyen d'alimentation électrique embarqué qui est relié audits moyens collecteurs d'énergie électrique, et qui est connecté d'une part audit moyen de stockage et d'autre part à ladite chaîne de traction.

Et grâce à ce système d'alimentation selon l'invention, ledit moyen d'alimentation électrique à très basse tension alimente ledit moyen d'alimentation électrique embarqué, celui-ci alimentant à son tour ledit moyen de stockage afin qu'il emmagasine de l'énergie électrique, jusqu'à concurrence de sa capacité. Cette alimentation se fait dans les phases successives suivantes :
a) pendant la phase de course sur l'erre sur du plat où la puissance demandée par la chaîne de traction est modeste voire nulle,
b) pendant la phase de freinage où il y a en outre une récupération d'énergie électrique à partir de la chaîne de traction,
c) et pendant la phase d'arrêt où la puissance demandée par la chaîne de traction est nulle, et
le système d'alimentation électrique selon l'invention utilise, non seulement l'énergie prélevée sur le moyen d'alimentation à très basse tension, mais aussi l'énergie électrique qui a été emmagasinée lors desdites phases (a, b, c) dans ledit moyen de stockage pour alimenter la chaîne de traction pendant la phase de démarrage ou lors d'une pente à monter où la puissance demandée par la chaîne de traction est relativement importante, ou dans une erre hors alimentation, et également l'énergie du moyen d'alimentation à très basse tension dans les autres phases de déplacement.

L'alimentation par les éléments d'alimentation linéaires, à partir d'un moyen d'alimentation à très basse tension ne présente pas de risque électrique pour les personnes et permet, compte tenu desdites phases de fonctionnement du véhicule de transport, de type tramway et trolleybus en particulier, d'emmagasiner suffisamment d'énergie électrique dans le moyen de stockage, pourvu à cet effet d'une capacité adéquate, pour couvrir les plus grosses demandes d'énergie électrique de la chaîne de traction.

Les éléments d'alimentation électrique linéaires peuvent être constitués par des rails, des câbles, des tiges ou analogues.

Lesdits rails ou éléments linéaires conducteurs électriques sont avantageusement disposés sur le sol, isolés électriquement, parallèles et distincts l'un de l'autre ou contigus.

Selon une première variante du système selon l'invention, appliquée aux tramways roulants sur des rails de roulement, lesdits rails d'alimentation linéaires sont distincts des rails de roulement. Cette configuration est dite à quatre rails.

Selon une seconde variante du système selon l'invention pour la même application, lesdits rails d'alimentation sont confondus avec les rails de roulement. Cette configuration est dite à deux rails.

Selon une troisième variante du système selon l'invention pour cette application, l'un des rails d'alimentation est électriquement confondu avec au moins un des rails de roulement tandis que l'autre rail d'alimentation est électriquement distinct des rails de roulement. Cette configuration est dite à trois rails.

Selon une particularité du système selon l'invention, ledit moyen d'alimentation à très basse tension est constitué par plusieurs postes d'alimentation indépendants à très basse tension installés le long de la voie, soit entre les rails, soit latéralement à proximité des rails.

Lesdits postes d'alimentation indépendants à très basse tension peuvent être installés le long de la voie au moins à chaque station d'arrêt et peuvent éventuellement être reliés entre eux en cas de besoin par exemple si l'un d'entre eux n'était plus alimenté.

Selon une autre particularité du système, ledit moyen de stockage comporte des batteries d'accumulateurs et des hypercondensateurs combinés, et est dimensionné de façon à couvrir la demande la plus importante en énergie de la chaîne de traction, à savoir un démarrage du véhicule suivi d'une pente à monter.

Selon une autre particularité du système, le moyen d'alimentation électrique embarqué comporte au moins un dispositif calculateur pilotant la distribution d'énergie du moyen de stockage à la chaîne de traction, et notamment la recharge des hyper-condensateurs, leur décharge sélective en fonction de la demande d'énergie, des séquences de roulement et des pertes en ligne, et la récupération d'énergie de freinage du véhicule par le moyen de stockage depuis le moteur de la chaîne de traction commuté en génératrice

La tension délivrée par le moyen d'alimentation électrique à très basse tension peut être de 48 V continu. Avantageusement l'un des rails est porté au potentiel +24V, l'autre -24V continu par rapport au potentiel de la terre mais la tension peut être adaptée au véhicule et à la configuration de la voie.

Par exemple, lorsque les rails sont enfouis pour être hors de portée de la main de l'homme, la tension du moyen d'alimentation électrique peut atteindre la valeur de 120V, l'un des rails étant au potentiel + 60V et l'autre - 60V par rapport au potentiel de la terre.

Naturellement, le système d'alimentation selon l'invention alimente également les accessoires auxiliaires du véhicule, tels l'éclairage, le chauffage, la climatisation, etc....

### DESCRIPTION DES FIGURES

L'invention est illustrée ci-après à l'aide d'exemples de réalisation non limitatifs et en référence aux dessins annexés, sur lesquels :
la figure 1 représente un schéma fonctionnel d'un mode de réalisation du système d'alimentation selon l'invention appliqué à un tramway ;
les figures 2a, 2b et 2c illustrent graphiquement différentes puissances instantanées, respectivement, dans la chaîne de traction, dans le moyen de stockage et dans le moyen d'alimentation très basse tension au fur et à mesure du déroulement d'un trajet ;
la figure 3 représente une variante du système d'alimentation selon l'invention utilisant un poste d'alimentation électrique à très basse tension placé à chaque stations d'arrêt et ce tout au long de la ligne ;
la figure 4 est un schéma de circuit du moyen d'alimentation électrique embarqué du véhicule,
et les figures 5a, 5b montrent des exemples de collecteur d'énergie électrique pour véhicules de traction électrique à pneus, de type trolleybus.

### DESCRIPTION DETAILLEE D'UN MODE DE REALISATION

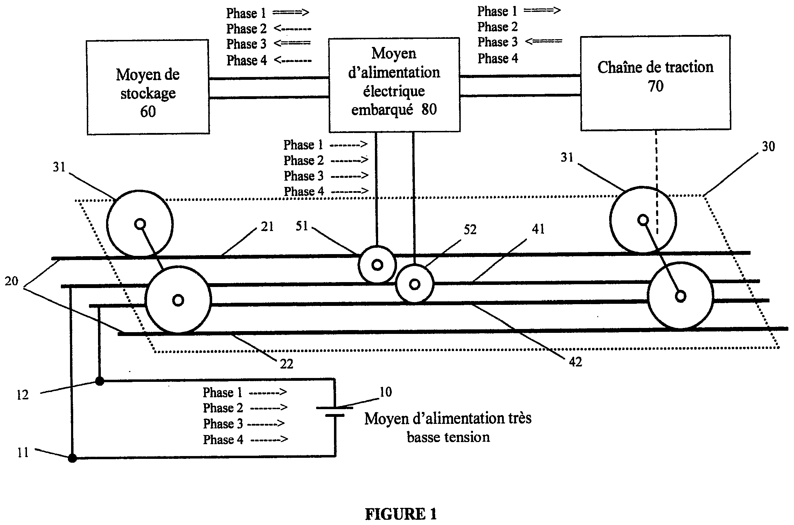

La figure 1 représente une configuration du système d'alimentation selon l'invention, dite à quatre rails, pour un véhicule ferroviaire de type tramway. Ce système comprend un moyen d'alimentation électrique à très basse tension 10 installé à proximité immédiate d'au moins une voie ferrée 20, à deux rails de roulement 21, 22 sur laquelle se déplace le véhicule.

Entre les rails de roulement sont disposés deux rails d'alimentation électrique 41,42, parallèles entre eux, et aux rails de roulement, dont le premier 41 est relié à une borne 11 dudit moyen d'alimentation électrique et le deuxième 42 est relié à une autre borne 12 dudit moyen d'alimentation électrique.

Sur la voie ferrée circule un véhicule ferroviaire 30 qui comprend quatre roues 31 reliées audit véhicule. Dans le véhicule ferroviaire sont embarqués un premier moyen collecteur d'énergie électrique 51 et un second moyen collecteur d'énergie électrique 52, ces derniers étant placés en contact mobile (glissant) respectivement avec le rail 41 et le rail 42.

Dans le véhicule ferroviaire sont embarqués également un moyen de stockage d'énergie électrique 60, une chaîne de traction 70 et un moyen d'alimentation électrique embarqué 80 qui est relié audits moyens collecteurs d'énergie électrique 51, 52, et qui est électriquement connecté d'une part audit moyen de stockage 60 et d'autre part à ladite chaîne de traction 70.

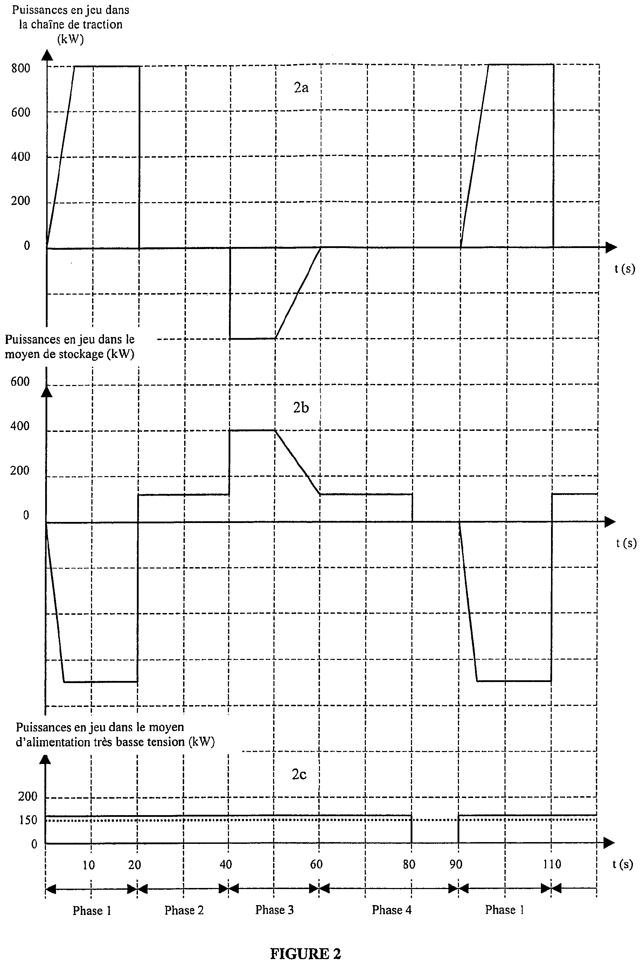

Les figures 2a, 2b, 2c illustrent le déroulement d'un trajet, entre une station de départ et une station d'arrivée. Ce trajet comprend quatre phases de fonctionnement successives :
- une phase de démarrage ou d'accélération, notée phase 1,
- une phase de croisière ou de course sur l'erre, notée phase 2,
- une phase de freinage ou de décélération, notée phase 3,
- et une phase d'arrêt à la station d'arrivée, notée phase 4.

La phase 1 est celle qui demande le plus d'énergie car le véhicule ferroviaire doit passer de l'arrêt à une vitesse de croisière. La puissance instantanée demandée par la chaîne de traction est importante, habituellement plusieurs centaines de kW pour un tramway ou un trolleybus, dans le cas présent 800 kW provenant pour 650 kW du moyen de stockage 60 et pour 150 kW du moyen d'alimentation très basse tension 10.

La phase 2 est une phase de maintien de la vitesse. Dans cette phase, la puissance demandée par la chaîne de traction est normalement nulle sur un trajet plat et reste modeste même si on la maintient à une valeur suffisante pour vaincre les frottements.

La phase 3 est celle où au contraire il est possible de récupérer de l'énergie lors du freinage du véhicule jusqu'à l'arrêt. La puissance instantanée récupérée depuis la chaîne de traction peut être importante, de l'ordre de plusieurs centaines de kW pour un tramway ou un trolleybus, dans le cas présent 400 kW provenant de la chaîne de traction 70.

La phase 4 est celle de l'arrêt à la station pendant laquelle les voyageurs montent et descendent. Le moyen de stockage 60 termine sa recharge, comme représenté à l'instant t = 80s de la figure 2c. Pendant cette phase, le véhicule ne consomme pas d'énergie, exceptée celle qui est toujours nécessaire pour alimenter les auxiliaires du véhicule (éclairage, chauffage, climatisation, etc.).

Revenant sur la figure 1, on y a représenté des flèches simples et doubles montrant le sens des transferts d'énergie entre les différents éléments selon les différentes phases.

La phase 1 est la phase de démarrage. La chaîne de traction 70 demande beaucoup d'énergie représenté par une double flèche sortante du moyen d'alimentation 80 et orientée vers la chaîne de traction 70. Cette énergie provient principalement du moyen de stockage 60 représenté par une double flèche entrante dans le moyen d'alimentation 80 et secondairement du moyen d'alimentation à très basse tension 10 représenté par une flèche simple entrante dans le moyen d'alimentation 80.

La phase 2 est la phase de course sur l'erre durant laquelle la chaîne de traction ne demande pas d'énergie. Il n'y a donc pas de flèche vers la chaîne de traction, par contre la recharge du moyen de stockage s'effectue depuis le moyen d'alimentation 10 représenté par une flèche simple entrante dans le moyen d'alimentation 80 puis une autre flèche sortante du moyen d'alimentation 80 pour aller dans le moyen de stockage 60.

La phase 3 est la phase de freinage durant laquelle il y récupération d'énergie depuis la chaîne de traction 70 représenté par une double flèche entrante dans le moyen d'alimentation 80 et une autre double flèche entrante dans le moyen de stockage 60. La recharge du moyen de stockage 60 s'effectue ici principalement par la récupération d'énergie au freinage et secondairement par le moyen d'alimentation à très basse tension 10, représenté à la figure 1 par une flèche simple entrante dans le moyen d'alimentation 80.

La phase 4 est la phase d'arrêt à la station durant laquelle la recharge du moyen de stockage se termine et représenté par une flèche simple entrante dans le moyen d'alimentation 80 et entrante dans le moyen de stockage 60,
et ainsi de suite.

Comme le montrent les figures 2a, 2b et 2c, un bilan global sur les quatre phases fait apparaître une puissance instantanée qui peut être importante, à titre d'exemple 800 kW pour un tramway dans la chaîne de traction pour la phase 1, délivrée par le moyen de stockage et l'alimentation très basse tension, tandis que la puissance moyenne sur toute la durée du trajet est nettement plus faible, à titre d'exemple de 150 kW, correspondant à celle du moyen d'alimentation très basse tension. La phase 3 correspond à l'énergie récupérée par le freinage à une puissance relativement importante, environ 400 kW récupérée par le moyen de stockage depuis la chaîne de traction.

La puissance moyenne délivrée par le moyen d'alimentation électrique 10 à très basse tension est à titre d'exemple à une tension de + 48V et -48V continus sur chacun des rails d'alimentation.

Le système d'alimentation selon l'invention fonctionne donc d'une façon générale comme suit :
- pendant les phases où la chaîne de traction ne demande pas d'énergie électrique, le moyen d'alimentation électrique embarqué 80 recharge le moyen de stockage 60 jusqu'à concurrence de sa capacité maximale,
- pendant les phases où la chaîne de traction demande de l'énergie électrique, le moyen d'alimentation électrique embarqué 80 puisera l'énergie nécessaire principalement dans le moyen de stockage 60.

Le moyen de stockage est dimensionné de façon à pouvoir couvrir la demande en énergie de la chaîne de traction qui est la plus importante, à savoir un démarrage suivi d'une pente à monter.

Pendant le déroulement des phases successives, le moyen d'alimentation à très basse tension 10 fournit une puissance sensiblement constante. Cette puissance peut même devenir nulle si le véhicule est à l'arrêt et, abstraction faite des auxiliaires (éclairage, chauffage, climatisation) également alimentés par le moyen d'alimentation à très basse tension 10, si le moyen de stockage a atteint sa capacité maximale.

On a décrit précédemment une configuration de captage électrique illustrée par la figure 1, mais ce captage peut être effectué selon d'autres configurations.

Selon l'une de ces configurations non illustrée sur les figures, le rail d'alimentation électrique 41 est confondu avec au moins un des deux rails de roulement 21 ou 22 de la voie ferrée, tandis que le rail d'alimentation électrique 42 est distinct de ces rails. Cette configuration, dite à troisième rail, nécessite un rail supplémentaire parallèle audits rails de roulement mais présente l'avantage d'être compatible avec les véhicules ferroviaires traditionnels conçus pour court-circuiter sur leur passage les rails de roulement sur lesquels ils circulent. Cette configuration est aussi compatible avec les circuits de voie traditionnels.

Selon une autre configuration non représentée sur les figures, les rails d'alimentation électriques 41 et 42 sont confondus avec les rails de roulement 21 et 22 de la voie. Cette configuration, dite à deux rails, économise la pose de deux rails parallèles pour l'alimentation électrique. Mais dans ce cas, le véhicule ferroviaire ne doit pas mettre lesdits rails en court-circuit, comme c'est le cas habituellement, car cela reviendrait à mettre le moyen d'alimentation à très basse tension en court-circuit.

Selon une autre configuration, il n'y a pas de rails de roulement mais seulement des rails d'alimentation électrique 41, 42. Cette configuration, dite également à 2 rails, convient aux véhicules électriques sur pneus tels les trolleybus et bus électriques. En outre, du fait de l'utilisation de très basse tension électrique, les rails d'alimentation électrique peuvent être avantageusement contigus de façon à minimiser les ouvrages de génie civil nécessaires.

Un des avantages du système selon l'invention est qu'il permet de s'affranchir des lignes aériennes de contact tout en optimisant l'efficacité énergétique puisque la récupération d'énergie s'effectue à bord de chaque véhicule, indépendamment des autres véhicules circulant sur la voie. Il en découle que le moyen d'alimentation à très basse tension est de puissance relativement faible et d'encombrement réduit par rapport aux postes d'alimentation traditionnels d'une puissance de l'ordre du mégawatt.

Il en résulte que l'on peut concevoir une ligne de transport urbain alimentée par des postes d'alimentation à très basse tension répartis le long de la voie et pouvant être intégrés aux stations d'arrêt en raison de leur puissance relativement modeste, qui est de l'ordre de quelques dizaines de kW.

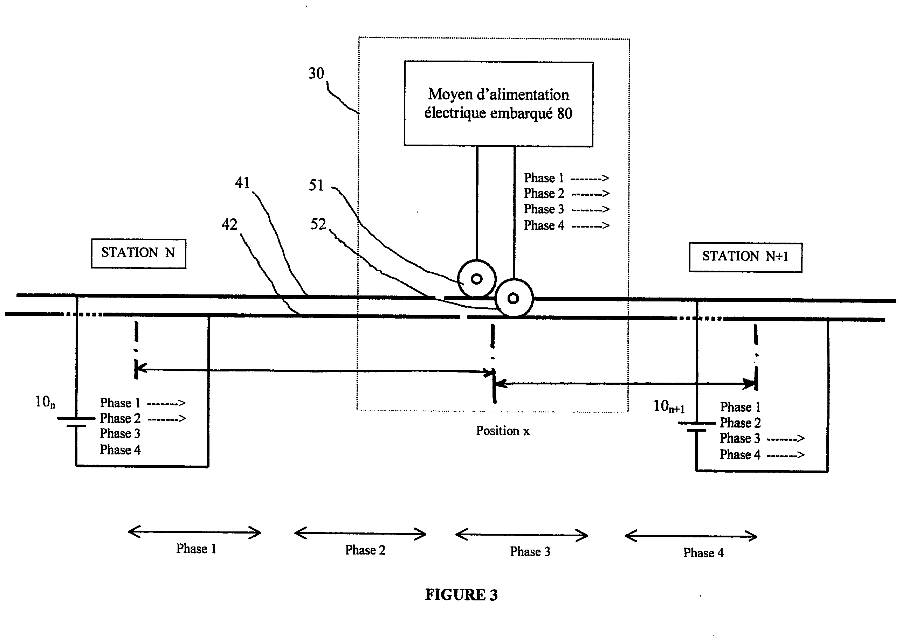

La figure 3 illustre ainsi une ligne de transport urbain comprenant des moyens ou postes d'alimentation à très basse tension (10ₙ, 10ₙ₊₁, etc.) intégrés aux stations d'arrêt (N, N+1, etc.) le long de la voie. Selon la figure 3, le moyen d'alimentation à très basse tension de la station N noté 10ₙ alimente le moyen d'alimentation électrique embarqué 80 du véhicule 30 quittant la station N pour rejoindre la station N+1, pour les phases 1 et 2, tandis que le moyen d'alimentation à très basse tension de la station N+1 noté 10ₙ₊₁ alimente le moyen d'alimentation électrique 80 pour les phases 3 et 4. Cette configuration minimise les pertes par effet joule. En effet, le véhicule est en principe à vitesse maximale au milieu de deux stations à la distance maximale de ces dernières et en condition de consommation d'énergie réduite. Par ailleurs, selon le profil de la voie, il reste possible d'ajouter des moyens d'alimentation entre les stations d'arrêt si nécessaire.

Le système selon l'invention permettrait ainsi de faire l'économie des postes de redressement traditionnels d'une puissance de l'ordre du mégawatt pour les remplacer par des moyens d'alimentation à très basse tension, certes plus nombreux, mais beaucoup plus modestes en puissance, taille et coût.

A titre d'exemple, un transformateur triphasé de 50kVA/48VDC avec ponts redresseurs et protections occupe un volume inférieur à quelques mètres cube tandis qu'un poste de redressement traditionnel occupe un volume de plusieurs centaines de mètres cubes.

Ces moyens d'alimentation pourraient, à titre d'exemple, avantageusement être disposés sous la voie ou sous la surface occupée par chaque station optimisant ainsi la surface occupée par lesdits moyens d'alimentation.

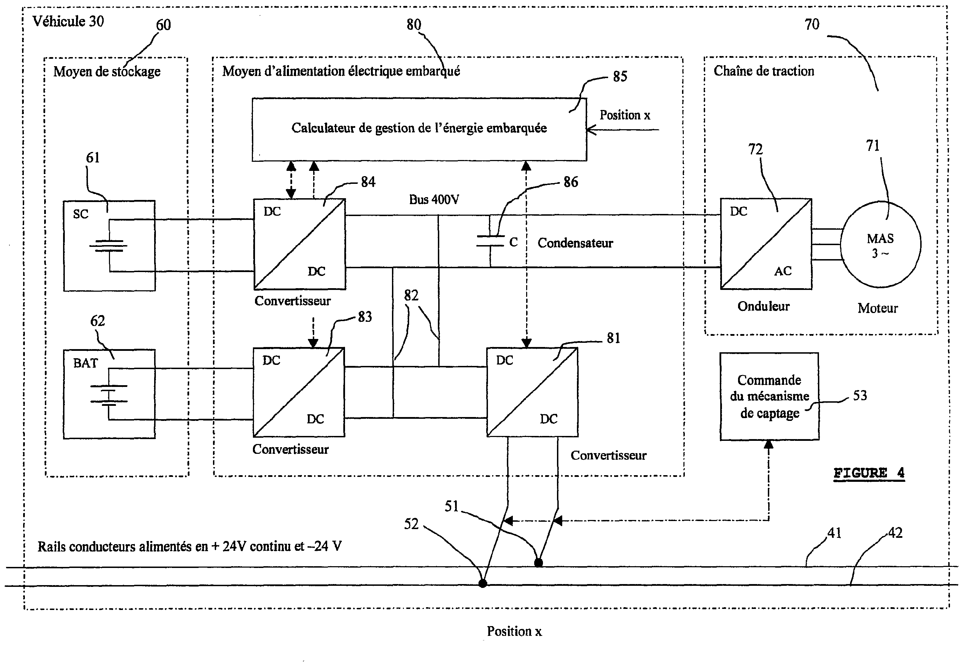

La figure 4 est une vue schématique d'un schéma de circuit du moyen d'alimentation électrique embarquée 80 sur un véhicule 30 à traction électrique. Ce moyen d'alimentation qui est délimité par un cadre en traits mixtes, est relié aux rails d'alimentation à très basse tension 41, 42 via les collecteurs respectifs d'énergie électrique 51, 52, aux moyens de stockage d'énergie 60 et à la chaîne de traction 70.

Lesdits moyens de stockage 60 comportent des éléments super ou hyper-condensateurs SC 61 et éventuellement un groupe de batteries BAT 62.

Au niveau du moyen de stockage, l'intérêt d'associer un groupe de batteries 62 au groupe de supercondensateurs 61 est d'optimiser la taille du groupe de supercondensateurs tout en facilitant la circulation du véhicule dans des zones ponctuelles d'autonomie partielle, tels que des carrefours ou des déviations ou sur des trajets à fortes pentes montantes.

La chaîne de traction 70 comporte un moteur électrique 71 d'entraînement du véhicule, par exemple un moteur asynchrone triphasé MAS-3∼ et un onduleur d'alimentation de moteur 72.

La position des collecteurs d'énergie électrique 51, 52 sur les rails 41, 42 est commandée par un dispositif de positionnement des collecteurs 53 comme on le verra dans la suite du texte.

Le moyen d'alimentation électrique embarqué 80 comporte essentiellement :
- un premier convertisseur de tension électrique 81 continu/continu permettant d'élever la très basse tension continu 48V du courant prélevé par les collecteurs 51, 52 à une tension de 400 V continu, au niveau d'un bus d'alimentation commun 82. Sur le bus de tension 400V continu est connecté un condensateur 86 chargé de maintenir la tension à peu près constante lors des transitoires de commutation des convertisseurs statiques ;
- un second convertisseur de tension électrique 83 continu/continu relié aux batteries 62 et au bus et transmettant l'alimentation électrique des batteries 62, au niveau du bus d'alimentation commun 82,
- un troisième convertisseur de tension électrique réversible 84 continu/continu adapté aux supercondensateurs 61 travaillant dans la plage de tension 400V à 800V et délivrant l'alimentation électrique des supercondensateurs 61 sur le bus 82, et sa recharge depuis le bus 82 selon les phases de fonctionnement, et ;
- un calculateur principal de gestion de l'énergie 85 gérant le fonctionnement du véhicule en marche, la vitesse, le freinage, l'arrêt, etc. Le calculateur principal est relié à des calculateurs secondaires, non représentés, respectivement, un calculateur des supercondensateurs 61, un calculateur des batteries 62, un calculateur de la chaîne de traction 70, un calculateur du dispositif de captage 51, 52, 53 ces calculateurs étant plus spécifiquement attachés à la gestion propre de ces éléments auxquels ils sont reliés.

Le moyen d'alimentation électrique embarquée 80 comporte en outre un dispositif de décharge (non représenté) des supercondensateurs 61 et du condensateur 86 pour la mise en sécurité de l'alimentation lors des interventions de maintenance par exemple.

Le moyen d'alimentation électrique embarqué 80 comporte enfin un dispositif chargeur de batteries (non représenté) alimenté directement par le dispositif de captage et assurant la recharge sélective des batteries 62 suivant le pilotage du calculateur batteries.

### LE FONCTIONNEMENT DU SYSTEME DE LA FIGURE 4 EST A PRESENT DÉCRIT

Les supercondensateurs étant supposés initialement déchargés, le dispositif de positionnement 53 pilote la mise en place des collecteurs 51, 52 sur les rails d'alimentation 41, 42. Ensuite, le calculateur principal pilote les convertisseurs 81 et 84 afin de charger les supercondensateurs 61 jusqu'à concurrence de leur capacité maximum. Le calculateur principal 85 détermine par mesure périodiquement la position x du véhicule pour calculer la distance entre le véhicule 30 et le moyen d'alimentation 10 le plus proche et à partir de cette information, le calculateur 85 pilote le premier convertisseur 81 en vue d'optimiser le prélèvement de courant, par exemple en diminuant son intensité s'il est éloigné du moyen d'alimentation à très basse tension 10 et en l'augmentant à l'approche du véhicule d'un prochain moyen d'alimentation à très basse tension de manière à limiter les pertes en ligne par effet Joule.

Le chargement des supercondensateurs étant réalisé, en fonction de la consigne de pilotage du véhicule fournie par le calculateur principal et donc du besoin en courant de la chaîne de traction 70, dans les diverses séquences de roulement du véhicule, le calculateur principal 85 commandera la décharge des supercondensateurs 61 sur le bus 82 pour la phase de démarrage notamment, sur une durée relativement courte (10 à 20 secondes), pour permettre l'admission d'une énergie importante à la chaîne de traction 70 pendant cette durée.

La phase de roulement à plat du véhicule pourra être effectuée par l'alimentation directe de la chaîne de traction 70 par les rails d'alimentation très basse tension 41, 42 sans l'intervention des batteries ni des supercondensateurs, tandis qu'une recharge variable de ces derniers peut être autorisée selon les consignes de leur calculateur propre et du calculateur principal 85.

La phase de décélération du véhicule est pilotée par le calculateur principal 85 qui commande le freinage du véhicule par commutation en génératrice du moteur asynchrone 71. Ceci permet lors du freinage la récupération dans les supercondensateurs 61 du courant induit important fourni par le moteur 71 commuté en génératrice, les supercondensateurs étant capables de stocker cette énergie. Cette procédure est réalisé par commutation en génératrice du moteur asynchrone 71, inversion du sens du courant dans l'onduleur 72 et par inversion du sens du courant dans le convertisseur 84 d'interface avec les supercondensateurs 61, sous le contrôle du calculateur principal 85.

Lors d'une phase de roulement sur une pente montante, le véhicule peut continuer à être alimenté plus particulièrement par les batteries 62, sous la consigne du calculateur principal 85, lesquelles permettent d'admettre un surcroît d'énergie à l'énergie des supercondensateurs 61 et à l'énergie de prélèvement des rails, 41, 42 de relativement longue durée et avec une capacité globale importante sans pour autant avoir un dimensionnement des supercondensateurs qui soit excessif.

La phase d'arrêt du véhicule, par exemple à une station d'arrêt et à proximité d'un moyen d'alimentation très basse tension 10 de la station N, correspondant à une phase d'alimentation nulle de la chaîne de traction 70, permettra de recharger au maximum les supercondensateurs 61 avec un courant maximal puisqu'au plus près de sa source.

A titre d'exemple pour un tramway équipé d'un moteur de 800 kW de puissance, on pourra utiliser un moyen de stockage 60 constitué de quinze batteries au Cd/Ni de 24 Volts/ 136 Ah d'une capacité totale de 50 kWh pour un poids de 1000kg et combiné à un supercondensateur d'une capacité totale de 50F/ 1000V et utilisé à moitié de sa capacité totale de 25.10⁶J et dont la masse totale est d'environ 3000 kg. Cette masse est faible relativement à la masse totale du véhicule qui est de 80 tonnes environ.

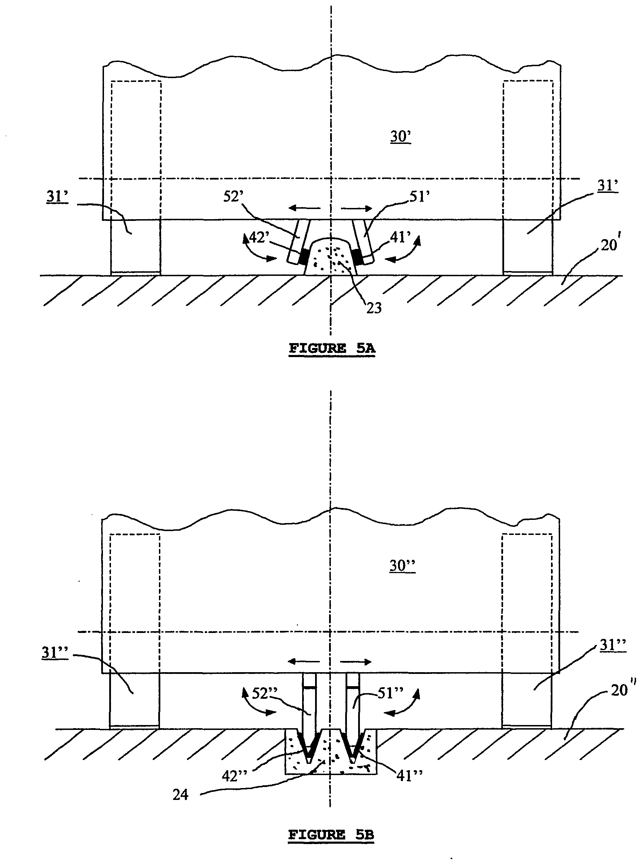

L'invention peut être également appliquée aux véhicules à traction électrique à pneus tels que trolley bus ou bus électriques. Cette application est illustrée par les figures 5a et 5b.

Sur la figure 5a, le véhicule 30' sur pneus 31' porte à sa partie inférieure deux collecteurs 51', 52' qui chevauchent un rail de guidage non conducteur 23 fixé sur la voie 20'. Ce dernier est pourvu de deux faces latérales extérieures sur lesquelles sont fixées deux rails d'alimentation électrique 41', 42' à très basse tension. Les collecteurs d'énergie électrique 51', 52' sont mobiles transversalement sous le véhicule (selon flèches) et leur déplacement relativement à la position centrale permet ainsi un autoguidage du véhicule sur la voie 20'. Ils sont en outre escamotables latéralement selon flèches, s'effaçant sur un obstacle ou dans une zone hors alimentation très basse tension, en autonomie provisoire ou débattement provisoire.

Sur la figure 5b, le véhicule 30" à pneus 31" porte à sa partie inférieure deux collecteurs 51", 52" qui viennent en contact avec les rails d'alimentation électrique 41", 42" disposés à l'intérieur d'un support non conducteur 24 placé sous la voie 20" et comportant une évacuation de l'eau de pluie (non représentée). Ces collecteurs s'escamotent sur un obstacle et sont également mobiles transversalement avec autoguidage du véhicule.

Si les rails 41" et 42" sont rendus non accessibles à la main, il est possible d'utiliser une très basse tension, de 48 V et - 48 V, voire davantage par rapport à la terre, ce qui équivaut à une tension d'alimentation de 96V donnant deux fois plus de puissance que le +24v et -24V.

On donnera à présent un exemple pratique de réalisation du système d'alimentation selon l'invention dans le cas particulier d'un autobus électrique d'une capacité de 50 places, de PTAC 13 tonnes. La chaîne de traction est équipée d'un moteur asynchrone 400V d'une puissance de 120kW. On considérera une condition de conduite dans laquelle la phase de démarrage jusqu'à 50km/h est suivie d'un dénivelé de pente 10m sur 500m de trajet à pleine charge, ce qui demande une énergie de 3Mjoules.

A cet effet, le moyen de stockage est réalisé par l'assemblage de 2 fois 24 modules EPCOS UltraCap 150F/42V constituant un supercondensateur de 12,5F/1000V travaillant pour des raisons pratiques dans la plage de tension 400V à 800V. Bien qu'ayant une capacité théorique de 6,25Mjoules le supercondensateur est utilisé pour 3Mjoules c'est à dire à 50% de sa capacité théorique. Il occupe une surface de 5 m2, un volume inférieur à 2m3 et représente une masse de 768 kg soit 6% du poids total du véhicule.

Les puissances installées aux stations sont adaptées à la nature des tronçons rencontrés entre les stations. Elles sont de l'ordre de 50kVA.

En conclusion, le système d'alimentation selon l'invention peut être appliqué avec succès à différents types de véhicules à traction électrique, notamment aux véhicules de transport en commun, sur rails ou sur pneus.

Il permet de concevoir une ligne de transport urbain ayant les avantages importants suivants :
- pas d'émission de CO2 ni de pollution atmosphérique urbaine,
- pas de pollution visuelle,
- une efficacité énergétique portée à son maximum théorique, la récupération d'énergie étant faite à bord du véhicule,
- un coût énergétique moindre que le bus diesel ou électrique à batteries,
- un coût d'infrastructure de génie civil allégé,
- un coût d'infrastructure de l'alimentation électrique allégé,
- une optimisation de la surface au sol, car il n'y a plus besoin de recourir à des emplacements spécifiques pour installer des postes de redressement traditionnels de forte puissance.

## Revendications

1. Système d'alimentation en énergie électrique à très basse tension pour au moins un véhicule à traction électrique (30) circulant sur une voie (20) et comprenant :
- des roues (31) reliées audit véhicule et roulant sur ladite voie (20), et
- au moins une chaîne de traction (70) dudit véhicule agissant sur les roues (31) et comprenant de façon connue en soi un moteur électrique (71) et sa commande (72),
- au moins un moyen d'alimentation électrique à très basse tension (10) installé à proximité immédiate de la voie (20),
- deux rails d'alimentation électrique (41,42) ou éléments d'alimentation électrique analogues, parallèles entre eux, contigus ou distants, dont un premier (41) est relié à une borne (11) dudit moyen d'alimentation électrique (10) et le deuxième (42) est relié à une autre borne (12) dudit moyen d'alimentation électrique (10),
- au moins un premier moyen collecteur d'énergie électrique (51) embarqué dans le véhicule et placé en contact mobile avec ledit premier rail (41),
- au moins un second moyen collecteur d'énergie électrique (52) également embarqué dans le véhicule et placé en contact mobile avec ledit second rail (42),
- au moins un moyen de stockage d'énergie électrique (60) embarqué dans le véhicule,
- au moins un moyen d'alimentation électrique embarqué (80) relié audits moyens collecteurs d'énergie électrique (51, 52), et connecté d'une part audit moyen de stockage (60) et d'autre part à la dite chaine de traction (70),
ledit système étant **caractérisé en ce que** ledit moyen d'alimentation embarqué (80) comprend au moins un calculateur (85) de gestion de l'énergie embarquée, et ledit moyen de stockage (60) comprend au moins des super-condensateurs (61) dont la charge/décharge est pilotée par le calculateur (85),
et **en ce que** :
1°) le calculateur (85) gère la phase de démarrage du véhicule (30) en apportant l'énergie nécessaire à la chaîne de traction (70) par déchargement des super-condensateurs (61) vers le moteur (71) à travers sa commande (72) ;
2°) le calculateur (85) gère la phase de course sur l'erre du véhicule en pilotant la recharge des super-condensateurs (61) à partir de l'alimentation extérieure (10) pendant que le véhicule (30) est en mouvement ;
3°) le calculateur (85) gère la phase de freinage du véhicule en pilotant la recharge des super-condensateurs (61) à partir de l'énergie générée par la chaine de traction (70) pendant le freinage ;
4°) le calculateur (85) gère la phase d'arrêt en station du véhicule en pilotant la recharge des super-condensateurs (61) à partir de l'alimentation extérieure (10) pendant que le véhicule est à l'arrêt, le calculateur (85) gérant la fin de la recharge lorsque les super-condensateurs (61) ont atteint leur capacité maximale.

2. Système selon la revendication 1 **caractérisé en ce que** la puissance du moyen d'alimentation extérieur (10) est insuffisante pour alimenter à puissance nominale la chaîne de traction (70) du véhicule (30) sans dégradation des performances dudit véhicule (30) ;

3. Système selon l'une quelconque des revendications précédentes **caractérisé en ce que** le calculateur de gestion d'énergie embarqué (85) gère la phase 1 du démarrage du véhicule en lui apportant l'énergie nécessaire par la décharge des super-condensateurs (61) augmenté de l'énergie fournie par l'alimentation extérieure (10) ;

4. Système selon l'une quelconque des revendications précédentes **caractérisé en ce que** le calculateur de gestion d'énergie embarqué (85) gère la phase 3 de freinage du véhicule en pilotant la recharge des super-condensateurs (61) à partir de l'énergie générée par la chaîne de traction (70) pendant le freinage augmenté de l'énergie fournie par l'alimentation extérieure (10) ;

5. Système selon l'une quelconque des revendications précédentes **caractérisé en ce que** lorsque l'alimentation (10) est absente, les batteries (62) se substituent à l'alimentation (10) selon le même principe de fonctionnement ;

6. Système selon l'une quelconque des revendications précédentes **caractérisé en ce que** le moyen d'alimentation (10) est de 48 V continu ;

7. Système selon la revendication 6, **caractérisé en ce que** le moyen d'alimentation électrique embarqué (80) comporte :
- un premier convertisseur de tension électrique (81) continu/continu permettant d'élever la très basse tension continue 48 V du courant prélevé par les collecteurs (51,52) à une tension de 400 V continu, au niveau d'un bus d'alimentation commun (82) ;
- un second convertisseur de tension électrique (83) continu/continu relié aux batteries (62) et au bus (82) et transmettant l'alimentation électrique des batteries (62) au niveau du bus d'alimentation commun (82),
- un troisième convertisseur de tension électrique réversible (84) continu/continu adapté aux supers condensateurs (61) travaillant dans la plage de tension 400 V à 800 V et délivrant l'alimentation électrique du super condensateur (61) sur le bus (82) et sa recharge depuis le bus (82) selon les phases de fonctionnement ;
- un calculateur principal de gestion de l'énergie (85) gérant le fonctionnement du véhicule (30) en marche, la vitesse, le freinage, l'arrêt, le calculateur principal (85) étant relié à des calculateurs secondaires, respectivement, un calculateur de superscondensateurs (61), un calculateur des batteries (62), un calculateur de la chaîne de traction (70), un calculateur du dispositif de captage (51, 52, 53), ces calculateurs étant plus spécifiquement attachés à la gestion propre de ces éléments auxquels ils sont reliés,
- un dispositif de décharge de sécurité pour la mise en sécurité du moyen d'alimentation électrique embarqué lors des interventions de maintenance, et
- un dispositif chargeur de batteries alimentée directement par le dispositif de captage (51, 52, 53) et assurant la recharge sélective des batteries (62) suivant le pilotage du calculateur de batteries.

8. Système selon la revendication 7, **caractérise en ce que** le calculateur principal (85) détermine par mesure périodiquement la position x du véhicule pour calculer la distance entre le véhicule (30) et le moyen d'alimentation (10) le plus proche et à partir de cette information, le calculateur (85) pilote le premier convertisseur (81) en vue d'optimiser le prélèvement de courant, par exemple, en diminuant son intensité s'il est éloigné du moyen d'alimentation à très basse tension (10) et en l'augmentant l'approche du véhicule d'un prochain moyen d'alimentation à très basse tension de manière à limiter les pertes en ligne par effet Joule.

9. Système selon l'une quelconque des revendications précédentes, **caractérisée en ce que** ledit véhicule (30) est un véhicule ferroviaire circulant sur une voie ferrée (20) dont les rails de roulement (21, 22) peuvent être confondus, l'un au moins, avec les rails d'alimentation (41, 42), ou sont distincts de ceux-ci.

10. Système selon l'une quelconque des revendications 1-8, **caractérisé en ce que** ledit véhicule est un véhicule à pneus (30' , 30" ).

11. Système selon la revendication 10, **caractérisé en ce que** lesdits moyen collecteur d'énergie électrique (51' , 52' ; 51", 52" ) sont disposés sous le véhicule (30', 30" ), étant mobile transversalement pour accompagner le véhicule (30' , 30" ) sur la voie (20' , 20" ) et susceptible de s'escamoter sur un obstacle ou hors des rails d'alimentation (41' ,42' ; 41" ,42" ).

12. Système selon la revendication 10, **caractérisée en ce que** la voie (20' ,20" ) comporte un rail de guidage du véhicule (30' ,30" ).

13. Véhicule (30) à traction électrique à stockage d'énergie embarqué, ledit véhicule étant sécurisé vis-à-vis des risques électriques pour le transport de voyageurs, tel qu'un tramway ou trolleybus, comprenant :
- des roues (31),
- au moins une chaîne de traction (70) dudit véhicule agissant sur les roues (31) et comprenant de façon connue en soi un moteur électrique (71) et sa commande (72),
- des moyens collecteurs d'énergie électrique (51, 52) embarqués dans le véhicule,
- au moins un moyen de stockage d'énergie électrique (60) embarqué dans le véhicule,
- au moins un moyen d'alimentation électrique embarqué (80) relié audits moyens collecteurs d'énergie électrique (51, 52), et connecté d'une part audit moyen de stockage (60) et d'autre part à la dite chaine de traction (70),
**caractérisé en ce que** :
ledit moyen d'alimentation embarqué (80) comprend au moins un calculateur (85) de gestion de l'énergie embarquée, et ledit moyen de stockage (60) comprend au moins des super-condensateurs (61) dont la charge/décharge est pilotée par le calculateur (85),
et **en ce que** :
1°) le calculateur (85) gère la phase de démarrage du véhicule (30) en apportant l'énergie nécessaire à la chaîne de traction (70) par déchargement des super-condensateurs (61) vers le moteur (71) à travers sa commande (72) ;
2°) le calculateur (85) gère la phase de course sur l'erre du véhicule en pilotant la recharge des super-condensateurs (61) à partir de l'alimentation extérieure (10) pendant que le véhicule (30) est en mouvement ;
3°) le calculateur (85) gère la phase de freinage du véhicule en pilotant la recharge des super-condensateurs (61) à partir de l'énergie générée par la chaine de traction (70) pendant le freinage ;
4°) le calculateur (85) gère la phase d'arrêt en station du véhicule en pilotant la recharge des super-condensateurs (61) à partir de l'alimentation extérieure (10) pendant que le véhicule est à l'arrêt, le calculateur (85) gérant la fin de la recharge lorsque les super-condensateurs (61) ont atteint leur capacité maximale.

## Patentansprüche

1. Elektrisches Versorgungssystem mit sehr niedriger Spannung für mindestens ein auf einem Gleis (20) verkehrendes elektrisches Traktionsfahrzeug (30), bestehend aus:
- Mit dem besagten Fahrzeug verbundenen und auf dem besagten Gleis (20) rollenden Rädern (31), und
- Mindestens einer Traktionskette (70) des besagten Fahrzeugs, die auf die Räder (31) einwirkt und in an sich bekannter Weise einen Elektromotor und den entsprechenden Antrieb aufweist,
- Mindestens ein in unmittelbarer Nähe des Gleises (20) installiertes elektrisches Versorgungsmittel mit sehr niedriger Spannung (10),
- Zwei elektrische Versorgungsschienen (41,42) oder vergleichbare elektrische Versorgungselemente, untereinander parallel, aneinandergrenzend oder auseinanderliegend, wobei die erste (41) an eine Anschlussklemme (11) des besagten elektrischen Versorgungsmittels (10) und die zweite (42) an eine andere Anschlussklemme (12) des besagten elektrischen Versorgungsmittels (10) angeschlossen ist,
- Mindestens ein erstes an Bord des Fahrzeugs befindliches und in beweglichen Kontakt zur besagten ersten Schiene (41) platziertes Stromkollektormittel (51),
- Mindestens ein zweites ebenfalls an Bord des Fahrzeugs befindliches Stromkollektormittel (52), das mit der besagten zweiten Schiene (42) in beweglichen Kontakt platziert ist,
- Mindestens ein elektrische Energiespeichereinrichtung (60), die in dem Fahrzeug eingebettet ist,
- mindestens ein an Bord befindliches Stromversorgungsmittel (80), das mit den besagten Stromkollektormitteln (51, 52) verbunden und zum Einen an das besagte Speichermittel (60) und zum Anderen an die besagte Traktionskette (70) angeschlossen ist
wobei das System **dadurch gekennzeichnet ist, dass** das Bord befindliches Stromversorgungsmittel (80) mindestens einen bordeigenen Energieverwaltungscomputer (85) umfasst und das Speichermittel (60) mindestens Superkondensatoren (61) umfasst deren Ladung / Entladung vom Computer (85) gesteuert wird,
und in dem:
1 °) der Computer (85) verwaltet die Startphase des Fahrzeugs (30), indem er der Traktionskette (70) die notwendige Energie zuführt, indem er die Superkondensatoren (61) durch den Motor (71) entlädt Kontrolle (72);
2 °) der Computer (85) verwaltet die Rennphase auf der Straße des Fahrzeugs, indem die wiederaufladenden Superkondensatoren (61) von der externen Stromversorgung (10) angetrieben werden, während das Fahrzeug (30) in Bewegung ist;
3 °) der Computer (85) verwaltet die Bremsphase des Fahrzeugs durch Steuern der wiederaufladenden Superkondensatoren (61) aus der Energie, die durch die Traktionskette (70) während des Bremsens erzeugt wird;
4 °) der Computer (85) verwaltet die Stationsstoppphase des Fahrzeugs durch Steuern des Ladens der Superkondensatoren (61) von der externen Stromversorgung (10), während das Fahrzeug gestoppt ist Rechner (85), der das Ladeende verwaltet, wenn die Superkondensatoren (61) ihre maximale Kapazität erreicht haben.

2. System nach Anspruch 1, **dadurch gekennzeichnet, dass** die Energie der externen Energieversorgungseinrichtung (10) nicht ausreicht, um die Traktionskette (70) des Fahrzeugs (30) mit Nennleistung zu versorgen, ohne die Leistung des Fahrzeugs (30) zu verschlechtern

3. System gemäß eines beliebigen der vorstehenden Ansprüche, **dadurch gekennzeichnet, dass** der an Bord befindliche Energiemanagement-Rechner (85) die Phase 1 des Fahrzeugs ausgehend von der ihm zugeführten Energie durch die Entladung der Superkondensatoren (61) erhöht Energie, die von der externen Stromversorgung (10) geliefert wird.

4. System gemäß eines beliebigen der vorstehenden Ansprüche, **dadurch gekennzeichnet, dass** der Bord-Energie-Management-Computer (85) die Bremsphase (3) des Fahrzeugs steuert, indem er das Wiederaufladen der Superkondensatoren (61) aus der erzeugten Energie steuert, durch die Traktionskette (70) während des verstärkten Abbremsens der von der externen Stromversorgung (10) gelieferten Energie.

5. System gemäß eines beliebigen der vorstehenden Ansprüche, **dadurch gekennzeichnet, dass** die Batterien (62) die Stromversorgung (10) nach dem gleichen Funktionsprinzip ersetzen, wenn die Stromversorgung (10) fehlt.

6. System gemäß eines beliebigen der vorstehenden Ansprüche, **dadurch gekennzeichnet, dass** die Zufuhreinrichtung (10) 48 V kontinuierlich ist.

7. System nach Anspruch 6, **dadurch gekennzeichnet, dass** das an Bord befindliche Stromversorgungsmittel (80) Folgendes umfasst:
- Einen ersten elektrischen Spannungsumwandler (81) Gleichstrom/Gleichstrom zur Erhöhung des von den Kollektoren (51, 52) gezogenen sehr niedrigen Gleichspannungspegels von 48 V auf eine Gleichspannung von 400 V, auf Ebene einer gemeinsamen Versorgungssammelleitung (82);
- Einen zweiten elektrischen Spannungsumwandler (83) Gleichstrom/Gleichstrom, der mit den Batterien (62) und der Versorgungssammelleitung (82) verbunden ist und die Stromversorgung der Batterien (62) auf Ebene der Versorgungssammelleitung (82) überträgt;
- Einen dritten umkehrbaren elektrischen Spannungsumwandler (84) Gleichstrom/Gleichstrom, der an die Superkondensatoren (61) angepasst ist, die im Spannungsbereich 400 V bis 800 V arbeitet und die Stromversorgung des Superkondensators (61) an den Bus (82) liefern und Wiederaufladen von dem Bus (82) entsprechend den Betriebsphasen;
- Einen Hauptrechner zur Energieverwaltung (85), der den Betrieb des Fahrzeugs (30) in Fahrt, die Geschwindigkeit, das Bremsen und den Halt regelt, wobei der Hauptrechner (85) an Zweitrechner angeschlossen ist, und zwar jeweils einen Rechner für die Superkondensatoren (61), einen Rechner für die Batterien (62), einen Rechner für die Traktionskette (70), einen Rechner für die Abnehmervorrichtung (51,52,53), wobei diese Rechner wiederum genauer für die Verwaltung der jeweils mit ihnen verbundenen Elemente eingesetzt werden;
- Eine Sicherheitsentladevorrichtung für die Sicherung des an Bord befindlichen elektrischen Versorgungsmittels bei Wartungsarbeiten, und
- Ein direkt von der Abnehmervorrichtung (51,52,53) versorgtes Batterieladegerät, das die selektive Aufladung der Batterien (62) gemäß der Steuerung durch den Rechner für die Batterien sicherstellt.

8. System nach dem Anspruch 7, **dadurch gekennzeichnet, dass** der Hauptrechner (85) regelmäßig durch Messung die Position x des Fahrzeugs feststellt, um die Distanz zwischen dem Fahrzeug (30) und dem nächstliegenden Versorgungsmittel (10) zu berechnen, wobei der Rechner (85) ausgehend von dieser Information den ersten Spannungsumwandler (81) dahingehend steuert, dass die Stromabnahme optimiert, beispielsweise durch die Herabsetzung seiner Intensität, falls er vom elektrischen Versorgungsmittel mit sehr niedriger Spannung (10) weit entfernt ist und die Erhöhung der Intensität beim Herannahen des Fahrzeugs an das nächstgelegene Versorgungsmittel mit sehr niedriger Spannung, zum Zweck, den durch den Joule-Effekt herbeigeführten Übertragungsverlust zu verringern.

9. System gemäß eines beliebigen der vorstehenden Ansprüche, **dadurch gekennzeichnet, dass** das besagte Fahrzeug (30) ein auf Gleisen (20) verkehrendes Schienenfahrzeug ist, dessen Laufschienen (21,22), zumindest eine von ihnen, mit den Versorgungsschienen (41, 42) zusammengelegt werden können oder von diesen getrennt sind.

10. System gemäß eines beliebigen der vorstehenden Ansprüche 1-8, **dadurch gekennzeichnet, dass** Fahrzeug ein Reifenfahrzeug (30', 30 ") ist.

11. System nach Anspruch 10, **dadurch gekennzeichnet, dass** die besagten Mittel zur Abnahme elektrischer Energie (51', 52'; 51", 52") unter dem Fahrzeug (30', 30") angeordnet sind und in Querrichtung bewegt werden können, um das Fahrzeug (30', 30") auf der Spur (20', 20") zu begleiten und zu führen ; auf einem Hindernis oder außerhalb der Versorgungsschienen (41', 42' ; 41", 42") aber einziehbar sind.

12. System nach Anspruch 10, **dadurch gekennzeichnet, dass** die Schiene (20 ', 20") eine Fahrzeugführungsschiene (30', 30 ") aufweist.

13. Elektrisches Zugfahrzeug (30) mit sicherem bordeigenem Energiespeicher in Bezug auf elektrische Risiken für den Personenverkehr, wie beispielsweise eine Straßenbahn oder einen Oberleitungsbus, umfassend:
- Räder (31),
- mindestens eine Traktionskette (70) des Fahrzeugs, die auf die Räder (31) wirkt und in an sich bekannter Weise einen Elektromotor (71) und seine Steuerung (72) aufweist,
- mittels elektrischer Energie eingelassener Kollektor (51, 52) in das Fahrzeug,
- mindestens eine elektrische Energiespeichereinrichtung (60), die in dem Fahrzeug eingebettet ist,
- mindestens eine Bordstromversorgungseinrichtung (80), die mit der elektrischen Energiesammeleinrichtung (51, 52) verbunden ist und einerseits mit der Speichereinrichtung (60) und andererseits mit dieser Traktionskette (70) verbunden ist,
**dadurch gekennzeichnet**
das Bordstromversorgungsmittel (80) mindestens einen Bord-Energieverwaltungscomputer (85) aufweist und das Speichermittel (60) mindestens Superkondensatoren (61) aufweist, deren Ladung / Entladung gesteuert wird durch den Taschenrechner (85),
und in dem:
1 °) der Computer (85) verwaltet die Startphase des Fahrzeugs (30), indem er der Traktionskette (70) die notwendige Energie zuführt, indem er die Superkondensatoren (61) durch den Motor (71) entlädt durch Kontrolle (72);
2 °) der Computer (85) verwaltet die Rennphase auf der Straße des Fahrzeugs, indem die wiederaufladenden Superkondensatoren (61) von der externen Stromversorgung (10) angetrieben werden, während das Fahrzeug (30) in Bewegung ist;
3 °) der Computer (85) verwaltet die Bremsphase des Fahrzeugs durch Steuern der wiederaufladenden Superkondensatoren (61) aus der Energie, die durch die Traktionskette (70) während des Bremsens erzeugt wird;
4 °) der Computer (85) verwaltet die Stationsstoppphase des Fahrzeugs durch Steuern des Ladens der Superkondensatoren (61) von der externen Stromversorgung (10), während das Fahrzeug gestoppt ist Rechner (85), der das Ladeende verwaltet, wenn die Superkondensatoren (61) ihre maximale Kapazität erreicht haben.

## Claims

1. A system for supplying extra low voltage electrical energy for at least one electrical traction vehicle (30) running on a track (20) and comprising:
- wheels (31) linked to said vehicle and rolling on said track (20), and
- at least one traction chain (70) of said vehicle acting on the wheels (31) and comprising in a manner known per se, an electric motor (71) and its control (72),
- at least one extra low voltage power supply means (10) installed in the immediate vicinity of the track (20),
- two power supply rails (41, 42) or similar power supply elements, parallel to each other, adjacent or distant, of which a first (41) is linked to a terminal (11) of said power supply means (10) and the second (42) is linked to another terminal (12) of said power supply means (10),
- at least one first electrical energy collection means (51) on board the vehicle and placed in moving contact with said first rail (41),
- at least one second electrical energy collection means (52) also on board the vehicle and placed in moving contact with said second rail (42),
- at least one electrical energy storage means (60) on board the vehicle,
- at least one on-board electric supply means (80) connected to said electrical energy collecting means (51, 52), and connected on the one hand to said storage means (60) and on the other hand to said traction (70),
said system being **characterized in that** on-board power supply means (80) comprises at least one on-board energy management computer device (85), and said storage means (60) comprises at least super-capacitors (61) whose charge / discharge is controlled by the computer (85)
and **in that**:
1 °) the computer (85) manages the starting phase of the vehicle (30) by supplying the necessary energy to the traction chain (70) by unloading the super-capacitors (61) to the motor (71) through its control (72);
2 °) the computer (85) manages the stroke phase on the road of the vehicle by driving the recharging of the super-capacitors (61) from the external power supply (10) while the vehicle (30) is in motion;
3 °) the computer (85) manages the braking phase of the vehicle by controlling the recharging of the super-capacitors (61) from the energy generated by the traction chain (70) during braking;
4 °) the computer (85) manages the station stopping phase of the vehicle by controlling the charging of the super-capacitors (61) from the external power supply (10) while the vehicle is stopped, the calculator (85) managing the end of charging when the super-capacitors (61) have reached their maximum capacity.

2. The system as claimed in claim 1, **characterized in that** the power of the external power supply means (10) is insufficient to power at nominal power the traction chain (70) of the vehicle (30) without degrading the performance of said vehicle (30);

3. The system according to any one of the preceding claims, **characterized in that** the on-board energy management calculator (85) manages the starting phase 1 of the vehicle by supplying it with the energy required by the discharge of the super-capacitors (61) increased by the energy supplied by the external power supply (10);

4. The system according to any one of the preceding claims, **characterized in that** the on-board energy management computer (85) manages the braking phase 3 of the vehicle by controlling the recharging of the super-capacitors (61) from the energy generated by the pull chain (70) during the braking increased by the energy supplied by the external power supply (10);

5. The system according to any one of the preceding claims **characterized in that** when the power supply (10) is absent, the batteries (62) replace the power supply (10) according to the same operating principle;

6. The system according to any one of the preceding claims, **characterized in that** the supply means (10) is of 48 V DC;

7. The system according to claim 6, **characterized in that** the on-board power supply means (80) comprises:
- a first DC/DC electrical voltage converter (81) for raising the 48V DC extra low voltage of the current picked up by the collectors (51, 52) to a voltage of 400 V DC, on a common supply bus (82);
- a second DC/DC electrical voltage converter (83) linked to the batteries (62) and to the bus (82) and transmitting the power supply from the batteries (62) to the common supply bus (82),
- a third DC/DC reversible electrical voltage converter (84) suited to the supercapacitors (61) working in the 400 V to 800 V voltage range and delivering the power supply from the supercapacitor (61) to the bus (82) and recharging it from the bus (82) depending on the operating phases;
- a main energy management computer (85) managing the running, speed, braking and stopping operation of the vehicle (30), the main computer (85) being linked to secondary computers, respectively, a computer for the supercapacitors (61), a computer for the batteries (62), a computer for the traction chain (70), a computer for the pick-up device (51, 52, 53), these computers being more specifically assigned to the dedicated management of the elements to which they are linked;
- a safety discharging device for switching the on-board power supply means to a safe mode for maintenance operations, and
- a battery charger device directly fed by the pick-up device (51, 52, 53) and selectively recharging the batteries (62) according to the control from the battery computer.

8. The system according to claim 7, **characterized in that** the main computer (85) determines, by periodic measurement, the position x of the vehicle to compute the distance between the vehicle (30) and the nearest power supply means (10) and, based on this information, the computer (85) controls the first converter (81) to optimize the current pick-up, for example, by reducing its intensity if it is remote from the extra low voltage supply means (10) and by increasing it when the vehicle approaches a next extra low voltage supply means so as to limit the line losses by Joule effect.

9. The system according to any one of the preceding claims, **characterized in that** said vehicle (30) is a rail vehicle running on a rail track (20), the rolling rails of which (21, 22) can be combined, at least one, with the power supply rails (41, 42), or are separate from the latter.

10. The system according to any one of claims 1 to 8, **characterized in that** said vehicle is a vehicle with pneumatic tires (30', 30").

11. The system according to claim 10, **characterized in that** said electrical energy collection means (51', 52'; 51", 52") are disposed under the vehicle (30', 30"), being transversely mobile to accompany the vehicle (30', 30") on the track (20', 20"), and can be retracted over an obstacle or out of the power supply rails (41', 42'; 41", 42").

12. The system according to claim 10, **characterized in that** the track (20', 20") comprises a vehicle guide rail (30', 30").

13. A vehicle (30) with electrical traction with secure on-board energy storage in respect to electrical risks for the transport of passengers, such as a tramway or trolleybus, comprising:
- wheels (31),
- at least one traction chain (70) of said vehicle acting on the wheels (31) and comprising in a manner known per se, an electric motor (71) and its control (72),
- collector means of electrical energy (51, 52) embedded in the vehicle,
- at least one electrical energy storage means (60) embedded in the vehicle,
- at least one on-board power supply means (80) connected to said electrical energy collecting means (51, 52), and connected on the one hand to said storage means (60) and on the other hand to said traction (70),
**characterized in that**
said on-board power supply means (80) comprises at least one on-board energy management computer (85), and said storage means (60) comprises at least supercapacitors (61) whose charge / discharge is controlled by the calculator (85),
and **in that**:
1 °) the computer (85) manages the starting phase of the vehicle (30) by supplying the necessary energy to the traction chain (70) by unloading the super-capacitors (61) to the motor (71) through its control (72);
2 °) the computer (85) manages the stroke phase on the road of the vehicle by driving the recharging of the super-capacitors (61) from the external power supply (10) while the vehicle (30) is in motion;
3 °) the computer (85) manages the braking phase of the vehicle by controlling the recharging of the super-capacitors (61) from the energy generated by the traction chain (70) during braking;
4 °) the computer (85) manages the station stopping phase of the vehicle by controlling the charging of the super-capacitors (61) from the external power supply (10) while the vehicle is stopped, the calculator (85) managing the end of charging when the super-capacitors (61) have reached their maximum capacity.
